# EUROPÄISCHE PATENTSCHRIFT

(11) **EP 0 700 533 B1**
(45) Veröffentlichungstag und Bekanntmachung des Hinweises auf die Patenterteilung: **18.02.1998**
(21) Anmeldenummer: 94918796.7
(22) Anmeldetag: 26.05.1994
(51) Int. Cl.: G02F 1/136

(54) **VERFAHREN ZUM HERSTELLEN INTEGRIERTER AKTIVMATRIX-FLÜSSIGKRISTALLDISPLAYS**
PROCESS FOR PRODUCING INTEGRATED ACTIVE-MATRIX LIQUID CRYSTAL DISPLAYS
PROCEDE PERMETTANT DE PRODUIRE DES VISUELS A CRISTAUX LIQUIDES A MATRICE ACTIVE INTEGRES

(30) Priorität: 29.05.1993 DE 4318022
(43) Veröffentlichungstag der Anmeldung: 13.03.1996
(73) Patentinhaber: Daimler-Benz Aktiengesellschaft, 70546 Stuttgart (DE)
(72) Erfinder: BODENSOHN, Alexander, D-63069 Offenbach (DE)
(86) Internationale Anmeldenummer: EP9401709
(87) Internationale Veröffentlichungsnummer: WO9428460

(56) Entgegenhaltungen:
- EP-A- 0 407 993
- EP-A- 0 530 972
- EP-A- 0 586 147
- DE-A- 2 555 844
- GB-A- 2 204 980
- JOURNAL OF THE ELECTROCHEMICAL SOCIETY, Bd.139, Nr.2, Februar 1992, MANCHESTER, US Seiten 561 - 566, XP334396 A. SÖDERBÄRG 'Investigation of Buried Etch Stop Layer in Silicon Made by Nitrogen Implantation'

## Beschreibung

Die Erfindung betrifft ein Verfahren zum Herstellen integrierter Aktivmatrix-Flüssigkristalldisplays (AMLCD) nach dem Oberbegriff des Anspruchs 1. Aus der Veröffentlichung Salemo, J.P. et al "Single-Chrystal Silicon Transmissive AMLCD" Proceedings of the SID 1992, Digest p. 63 - 66 ist ein Herstellungsverfahren bekannt, auf das im folgenden als Stand der Technik näher eingegangen wird.

Bei dem genannten Verfahren werden in einer dünnen rekristallisierten Polysiliziumschicht auf einem Siliziumwafer Schaltungen realisiert. Dieses Schichtensystem wird upside-down auf ein Glassubstrat aufgebracht und das Siliziumsubstrat weitgehend abgetragen. Die AMLCD-Zelle wird durch eine zweite Glasplatte und weitere Standardprozeßschritte der Displaytechnologie vervollständigt.

Bei dem beschriebenen Verfahren werden die Transistoren in einer rekristallisierten Poly-Si-Schicht hergestellt. Dadurch haben die Bauelemente gegenüber solchen, welche in monokristallinen Schichten hergestellt werden, schlechtere elektrische Eigenschaften. Weiterhin ist die Dicke aller hergestellten Bauelemente gleich, was zu Einschränkungen bei der Auswahl der Bauelemente und den zu realisierenden Schaltungen führt. Weiterhin muß zur Komplettierung der Anzeigenzelle die aufwendige konventionelle Zellentechnologie verwendet werden.

Der Erfindung liegt deshalb die Aufgabe zugrunde, ein Verfahren zur Integration von elektronischen Bauelementen in AMLCDs zu entwickeln, wobei die Ansteuerelektronik und die Bildelemente des Displays kostengünstig herstellbar sind.

Aus der jap. Anmeldung JP 3-100 516 A, mit englischem Abstract in Pat. Abstr. Jap., P-1229, 22. Juli 1991, Vol. 15, No. 287, ist eine Flüssigkristall-Anzeigevorrichtung bekannt, bei der auf einer Halbleiterscheibe aus Silizium Anzeigeelemente herausgeätzt werden und auf den verbleibenden Stegen Treiber- und Ansteuerschaltkreise integriert werden. Bei diesem Herstellungsverfahren wird die einkristalline Siliziumscheibe mit einer Seite auf eine Quarzscheibe geklebt und danach auf ungefähr 2 µm Stärke heruntergeschliffen. Danach werden die Anzeigeelemente herausgeätzt und danach die Treiberschaltkreise in die Siliziumstege integriert. Danach wird die Displayzelle komplettiert.
In der jap. Anmeldung JP 4-128 717 A mit englischem Abstract in Pat. Abstr. Jap., P-1406, 20. August 1992, Vol. 16, No. 393, ist ebenfalls ein Flüssigkristall-Anzeigeelement beschrieben, bei dem ebenfalls auf dem beim Herausätzen der Fenster stehengebliebenen Rahmentreiber Schaltkreise und Bildelement-Elektroden aufgebracht sind.

In dem bisher bekannt gewordenen Stand der Technik sind keine Maßnahmen bekannt geworden, AMLCDs in monokristallinem Silizium herzustellen, bei denen zunächst einmal nur die Integration der Schaltkreise vorgenommen wird.

Diese Aufgabe wird gemäß der Erfindung durch die im Kennzeichen des Anspruchs 1 aufgeführten Merkmale gelöst.

In einem mit den aus der Mikroelektronik bekannten Herstellungsverfahren prozessierten Wafer mit Ansteuerelektronik, Bildpunkttransistoren und Elektroden werden durch ein Standardverfahren kleine Gräben an der Oberfläche der Oberseite erzeugt. Diese Gräben können wahlweise und bei geeigneter Maskierung des später folgenden Ätzprozesses auch durch Gräben auf der Unterseite ersetzt werden. Auf der Rückseite wird die Scheibe mit einer Maskierschicht bedeckt und auf der Oberseite mittels eines ganzflächig aufgebrachten Klebers eine Glasscheibe aufgebracht. über ein in der Unterseitenmaskierschicht erzeugtes Muster wird die Siliziumscheibe lokal anisotrop geätzt. Dieser Prozeß wird unterbrochen, sobald die verbleibende Siliziumschicht, im folgenden aktive Siliziumschicht genannt, im Bereich der entstehenden Ausnehmung für Licht im sichtbaren Wellenlängen-Bereich durchlässig geworden oder vollständig aufgelöst ist.

Dieses wird durch bekannte Ätzstoppverfahren erreicht. Nach dem Aufbringen der für die Displaytechnik benötigten und bekannten Hilfsschichten - z.B. zur Orientierung der Flüssigkristalle auf dem Boden der Ausnehmung und deren Bearbeitung wird eine weitere Glasscheibe auf alle Ausnehmungen aufgelegt, auf welcher durch ebenfalls bekannte Schritte ein Polarisationsfilter, eine Orientierungsschicht und eine durchgehenden Gegenelektrode aufgebracht wurden. Diese zweite Glasplatte wird durch Abstandsshalter (Spacer), welche auch durch Siliziumstrukturen ausgebildet werden können, zur dünnen aktiven Schicht im richtigen Abstand von z.B. 6µm gehalten. Durch die im Standardprozeß hergestellten Gräben wird nun der zwischen der aktiven Schicht und der zweiten Glasplatte entstandene Zwischenraum evakuiert, durch bekannte Verfahren mit Flüssigkristallen gefüllt sowie hermetisch verschlossen.

Durch diesen Aufbau ist es bei geeigneter Ansteuerung der Bildpunktelektroden mit Hilfe der im Standardverfahren integrierten Ansteuerelektronik und der Bildpunkttransistoren möglich, die Flüssigkristalle so anzusteuern, daß eine Transmission von Licht für den Bildpunkt erreicht, bzw. verhindert wird. Während die Bildpunkttransistoren im Bereich der dünnen Siliziumschicht direkt neben den Bildpunkten angeordnet sind, befinden sich die dazugehörenden Treiber im dickeren Randbereich des Siliziumplättchens.

Die Vorteile der Erfindung sind folgende:
1. Bildpunkttransistoren aus monokristallinem Material erreichen höhere Arbeitsfrequenzen im Vergleich zu polykristallinen Transistoren. Sie haben geringere Varlanz der Eigenschaften und geringere parasitäre Effekte. Außerdem ermöglicht es diese Technik, einen geringeren Platzbedarf der einzelnen Bildpunkttransistoren und damit eine höhere Auflösung zu erreichen.
2. Die Integration von Ansteuerschaltungen in dem monokristallinen Rahmen, welcher beim Herausätzen der für die Bildpunkttransistoren vorgesehenen Innenfläche stehenbleibt, ermöglicht einen konventionellen Schaltungsentwurf mit geringem Platzbedarf, d.h. eine höhere Komplexität. Dadurch wiederum können auch Testschaltungen integriert werden, welche einen Text vor der Endmontage ermöglichen.
3. Der mechanische Rahmen aus Silizium läßt eine einfachere Montagetechnik zu, wobei auch die Kontaktierung mit hoher Sicherheit und großer mechanischer Stabilität erfolgt.

Ein bevorzugtes Ausführungsbeispiel der Erfindung soll nun anhand der Zeichnung näher erläutert werden.

Es zeigt:
- Fig. 1: den Zustand der Siliziumscheibe zu Beginn der erfindungsgemäßen Bearbeitung im Schnitt;
- Fig. 2: die Struktur nach Aufbringen der ersten Glasscheibe und vor dem Ätzen;
- Fig. 3: die Struktur nach dem Ätzen;
- Fig. 4: den Zustand nach Aufbringen der Orientierungsschicht;
- Fig. 5: den Zustand nach dem Einbringen der zweiten Glasscheibe;
- Fig. 6: das Füllen des Zwischenraums mit Flüssigkristall;
- Fig. 7: eine bevorzugte Ausführungsalternative für das lichtsteuernde Element und
- Fig. 8: einen Ausschnitt der Si-Wanne mit Fenstern.

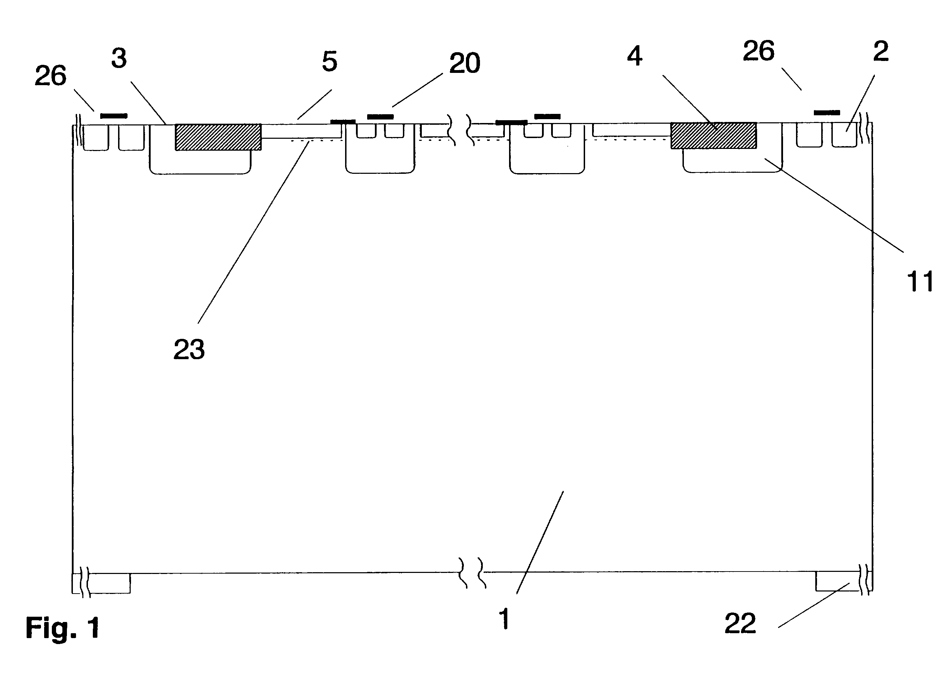

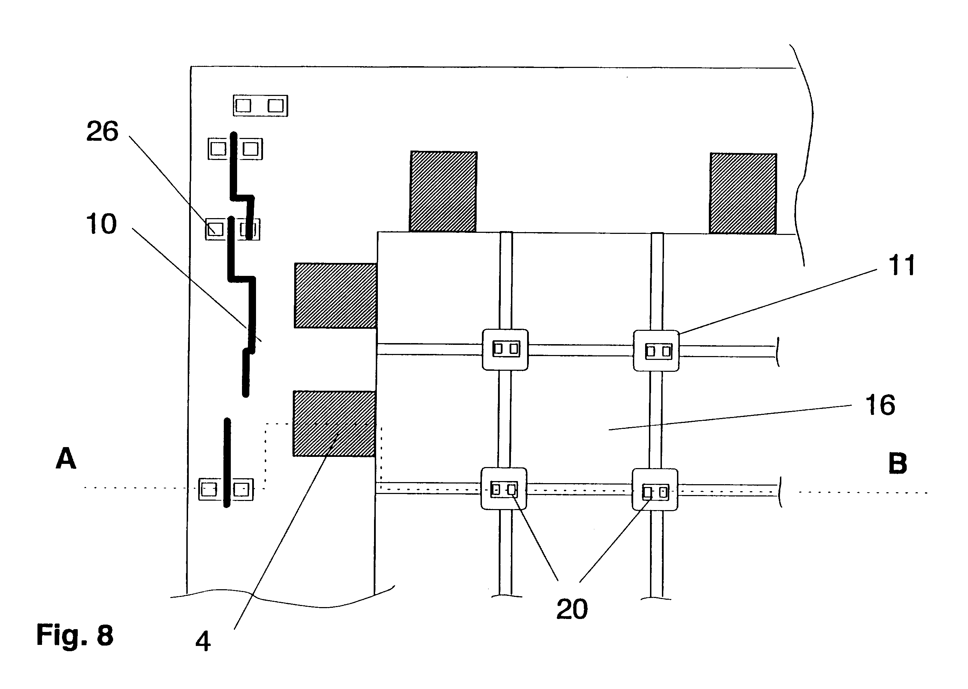

Bei dem in Fig. 1 dargestellten Anfangszustand sind das Siliziumgrundmaterial 1 und die in diesem Material mit den bekannten Dotier- und Diffusionsprozessen eingebrachten Dotierstoffwannen 2 zu sehen. Entstanden sind dabei Bildpunkttransistoren, Bildpunktelektroden und Ansteuerschaltungen. Der Schnitt durch die Siliziumscheibe verläuft längs der Linie A B in Fig. 8.
Ebenfalls dargestellt sind die durch Ätzen hergestellten Gräben 4 an der Si-Oberfläche 3, welche später zum Evakuieren der Anzeigenkammer verwendet werden. Wahlweise kann sich in diesem Zustand bereits eine, durch bekannte Schritte (etwa lokale Implantation von Sauerstoff oder Nitrid) eingebrachte Ätzstoppschicht 23 nahe der Oberfläche (ca. 0,4 - 1 µm) befinden.

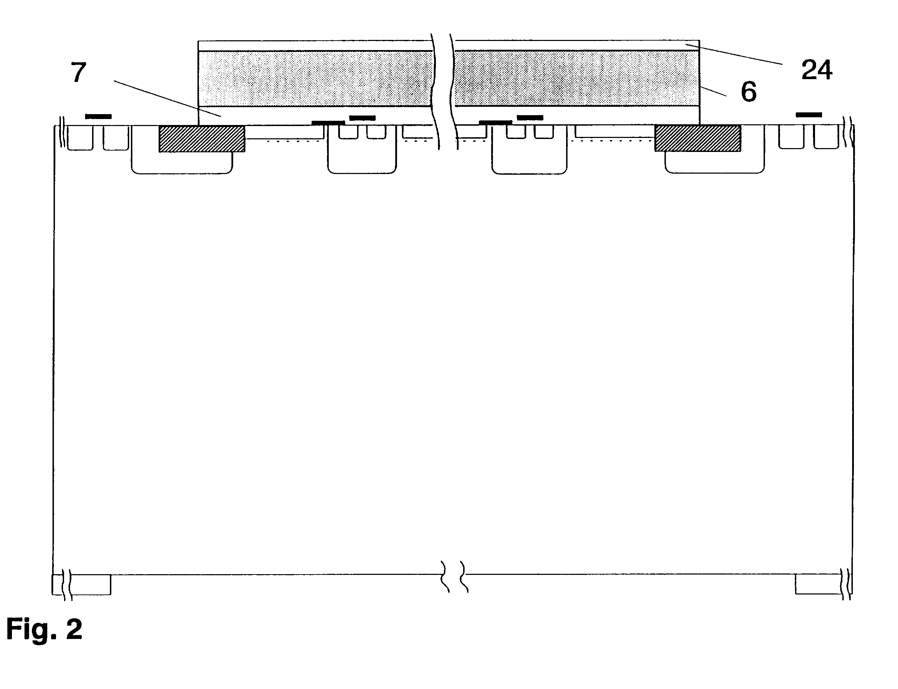

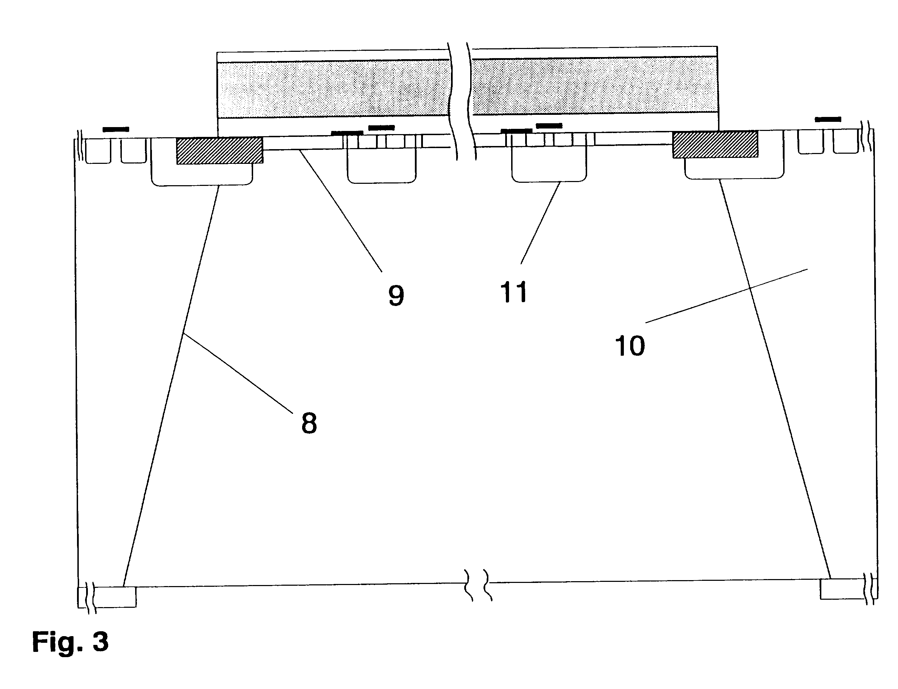

In Fig. 2 ist der nächste Schritt dargestellt, bei dem eine obere Glasplatte 6 mittels ganzflächig aufgetragenem, transparentem Kleber 7 auf die Oberfläche der Siliziumscheibe 1 aufgebracht wird. 24 ist eine Analysatorschicht. Danach wird das Mittelteil der Siliziumscheibe bis auf einen Randbereich über eine auf der Rückseite der Siliziumscheibe strukturierte Nitridmaske 22 herausgeätzt. Wie Fig. 3 zeigt, entsteht eine Ätzgrube, deren Wände 8 bei Verwendung von (100)-orientiertem Siliziumgrundmaterial und anisotropen Ätzen mit z. B. KOH-Lösung in den (111) Ebenen liegen. Es entstehen Gebiete 10, welche die volle Stärke des Ausgangsmaterials haben. Diese Gebiete bilden im Randbereich des Siliziumplättchens einen stabilen Rahmen. Es ist auf mehrere Arten möglich, den Ätzprozeß gezielt zu stoppen. Es sind z. B. Verfahren bekannt, bei denen mittels Dotierung geeignete Ätzstoppschichten 23 erzeugt werden. Bekannt sind auch Verfahren, bei denen der Ätzprozeß über Licht von der Oberseite der Si-Scheibe gesteuert wird. Im kristallinen Silizium wird solange geätzt, bis das Si für optisches Licht transparent wird. Auf diese Weise kann als eine Ausführungsform eine Si-Membran 9 übrigbleiben, welche eine Dicke von wenigen hundert Nanometern hat.

In Fig. 3 sind auch durch Dotierung entstandene Wannen als Erhebungen 11 zu sehen, welche nach dem Ätzen den definierten Abstand der zweiten Glasscheibe 12 zu dem Schichtsystem Membran/Deckglas gewährleisten sollen.

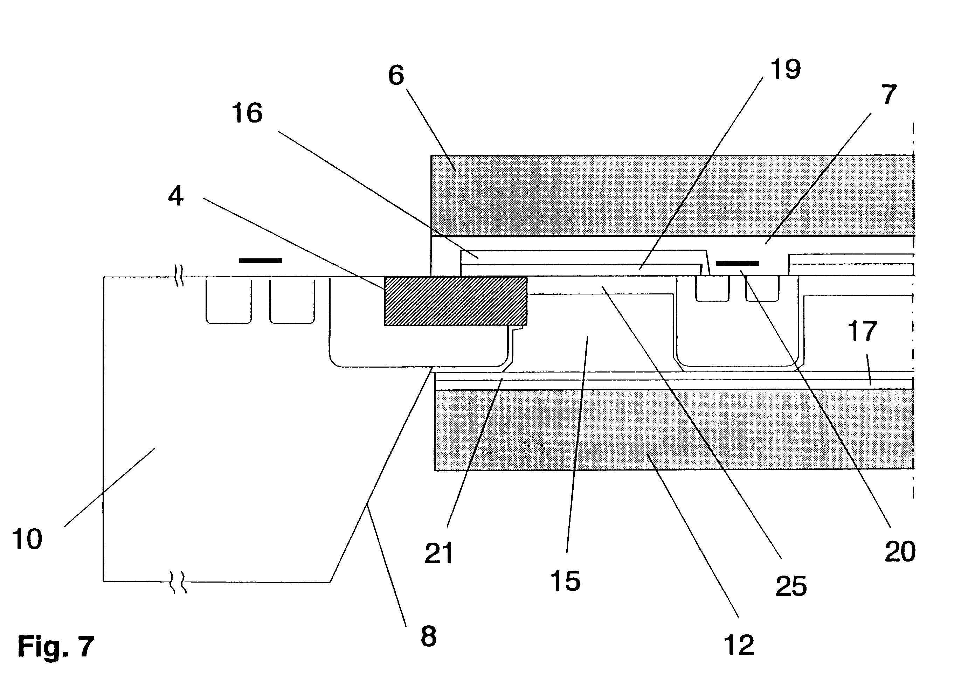

Die Membran besteht in einer bevorzugten Ausführungsform - wie in Fig. 7 dargestellt - aus einer Si3 N₄-Schicht 19 (bzw. aus einer Schichtfolge von CVD-Oxid und CVD-Nitrid). Diese Membran bleibt später beim Ätzen erhalten (wegen der geringen Ätzrate von KOH bei Nitrid und selektiven Ätzen der Ausnehmung von der Unterseite her). Das Silizium wird also im Bildpunkt vollständig entfernt. Die Nitridschicht kann schon während der Standardprozeßfolge sehr dünn aufgebracht werden. Auf dieser Si₃ N₄-Schicht 19 wird die durchsichtige Bildpunktelektrode 16, bevorzugt aus Indium-Zinn-Oxid (ITO), von der Oberseite her strukturiert.

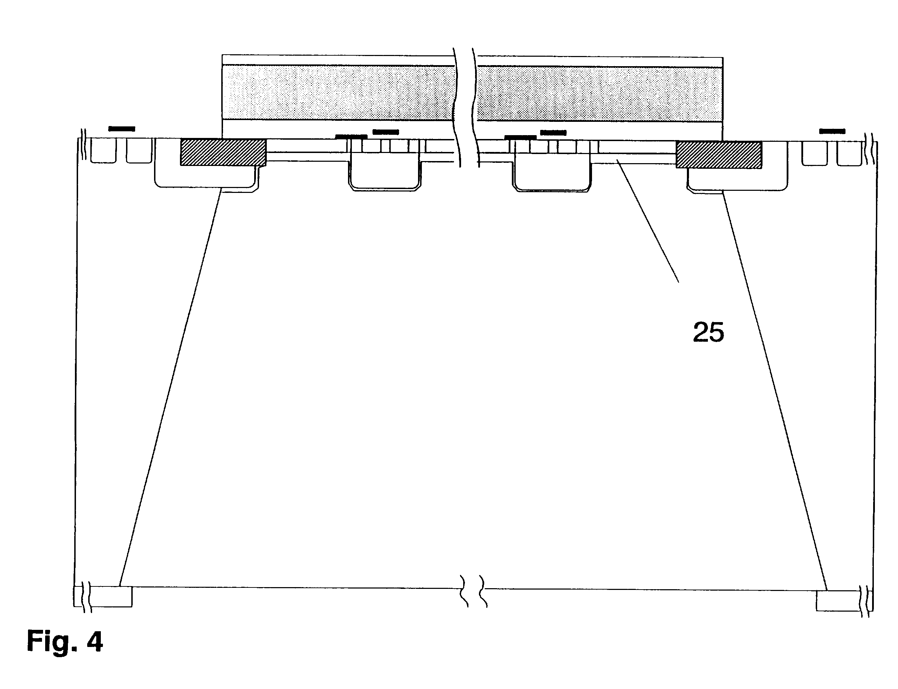

Das Aufbringen der Orientierungsschicht 25 ist in Fig. 4 abgeschlossen (s. a. Fig. 7).

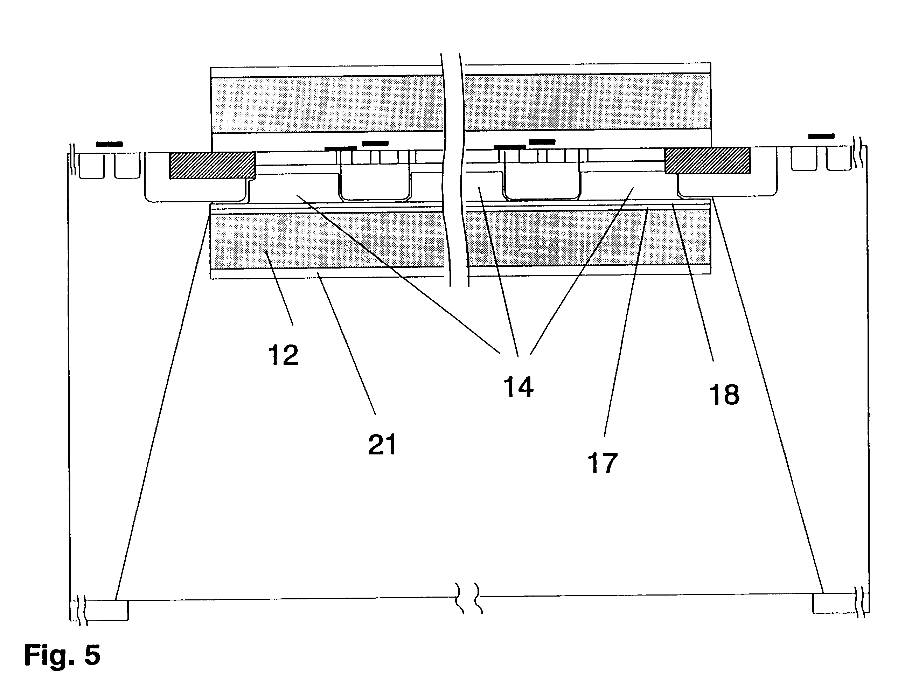

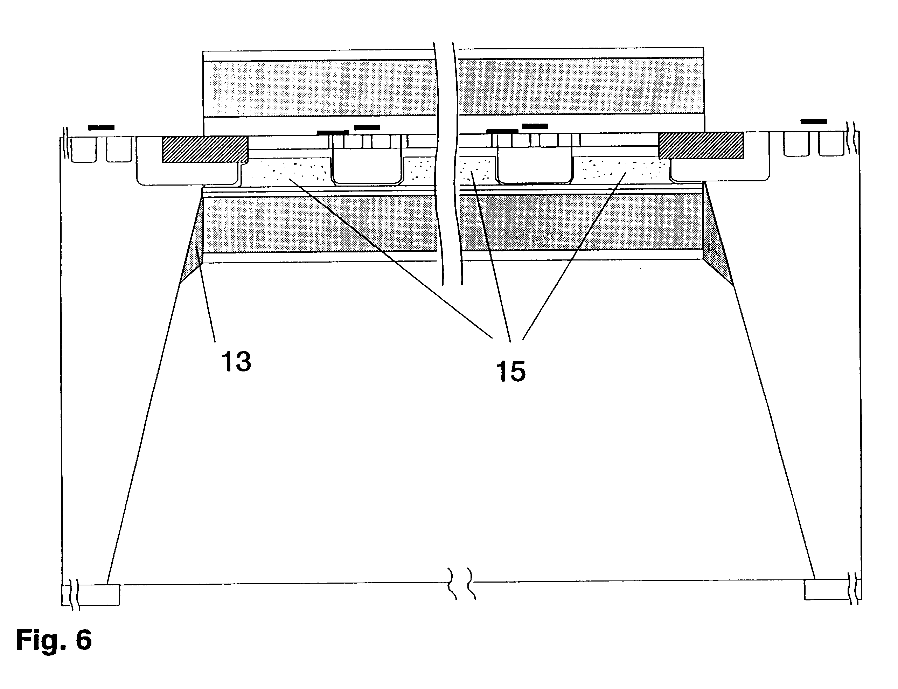

Fig. 5 zeigt die Struktur nach Einbringen der zweiten Glasscheibe 12. Die Glasscheibe selbst ist mit einer gleichen Orientierungsschicht für die Flüssigkristalle 18 und mit einer durchsichtigen Gegenelektrode 17 bedeckt. Auf den nach außen gerichteten Flächen sind wie üblich Polarisator- und Analysatorschichten 21 und 24 (s. Fig. 2) aufgebracht. Der übergang von der Glasscheibe 12 zur Si-Wand kann nun abgedichtet werden, wie in Fig. 6 dargestellt.

In die Hohlräume 14 dringt nach Evakuieren über die anfangs erwähnten Gräben Flüssigkristall 15 ein.

Fig. 7 zeigt die bereits besprochene bevorzugte Ausgestaltung der Bildpunktelektrode. Da die beiden Glasscheiben für die Stabilität ausreichen, ist es möglich, die Siliziumscheibe in den Fensterbereichen für die Bildpunkte auf eine Schichtdicke von nur 0,5 µm herunterzuätzen, oder das Silizium nach Fig. 7 dort vollständig zu entfernen.

An der Seite oder in der Ecke jedes der nach Fig. 8 schachbrettartig angeordneten Bildpunkte 5 ist ein Transistor 20 vorgesehen, welcher als MOS-Transistor auch in Si-Schichten von weniger als 1 µm ausgebildet werden kann. Im Gegensatz dazu kann die Ansteuerelektronik 26 im Bereich der Stege und am Rand in jeder herkömmlichen Technik hergestellt werden. Die Prozeßschritte zur Herstellung der Fenster im Silizium und die Weiterverarbeitung zum LCD-Element verlaufen von da an bei wesentlich niedrigeren Temperaturen und erfordern keine strengen Reinstraumbedingungen.

Wenn in der Anmeldung der Ausdruck "schachbrettartig" gebraucht wird, sind damit regelmäßige flächenhafte Anordnungen gemeint, also auch die Aufteilung in beispielsweise Dreiecke.

## Patentansprüche

1. Verfahren zum Herstellen integrierter Aktivmatrix-Flüssigkristalldisplays mit einer monokristallinen Siliziumscheibe, welche schachbrettartig in Bildelemente aufgeteilt ist, wobei jedes Bildelement aus einem Lichtventil, welches aus einer Flüssigkristallschicht, Orientierungsschichten, Elektroden und Polarisationsfiltern aufgebaut ist, und einem ansteuernden elektronischen Schaltkreis besteht, welcher in integrierter Bauweise auf der Oberseite der Siliziumscheibe hergestellt wird und eine lichtdurchlässige Elektrode des Lichtventils ansteuert, dadurch gekennzeichnet,
- daß zuerst die Ansteuerelektronik, mit Bildpunkttransistoren (20) und Bildpunktelektrodroden (16) mit einem aus der Mikroelektronik bekannten Herstellungsverfahren auf der monokristallinen Siliziumscheibe (1) hergestellt wird,
- auf der Oberseite Fenster (5) im Silizium (1) mittels einer strukturierten Maske vorbereitet werden, die schachbrettartig angeordnet sind,
- daß Gräben (4) in die Oberseite der Siliziumscheibe (1) eingebracht werden,
- daß die Siliziumscheibe (1) auf der Oberseite mittels eines Klebers (7) mit einer Glasscheibe (6) bedeckt wird,
- daß die Siliziumscheibe (1) durch ein auf der Unterseite in einer Maskierungsschicht erzeugtes Muster mit einem Ätzverfahren anisotrop geätzt wird, bei dem das Silizium entweder bis zu einer durch Ionenimplantation und/oder Diffusion in die Oberfläche eingebrachten Ätzstoppschicht oder bis zu einer auf die Oberfläche aufgetragenen, nicht ätzbaren Membran abgetragen wird,
- daß auf diese Weise eine Atzgrube mit Ausnehmungen (14) im Bereich der Fenster (5) in der Siliziumscheibe (1) gebildet wird, wobei die Fenster (5) zumindest für Licht im sichtbaren Bereich durchlässig sind,
- daß in die Ausnehmungen (14) eine Orientierungsschicht (25) eingebracht wird,
- daß eine zweite Glasscheibe (12) auf der Unterseite mit einem Polarisationsfilter und an der Oberseite mit einer Elektrode (17) und einer Orientierungsschicht (18) bedeckt wird,
- daß die zweite Glasscheibe (12) in die Ätzgrube eingesetzt wird und alle Ausnehmungen (14) überdeckt und durch Abstandshalter (11) in einem definierten Abstand zu den Bildpunktelektroden (16,17) gehalten wird,
- daß durch die Gräben (4) der Raum zwischen den Elektroden (16, 17) evakuiert, mit Flüssigkristallen gefüllt und hermetisch verschlossen wird.

2. Verfahren nach Anspruch 1, dadurch gekennzeichnet, daß di Siliziumschicht (9) im Bereich der Fenster (5) eine Stärke von 0,4 1µm aufweist.

3. Verfahren nach Anspruch 1 oder 2, dadurch gekennzeichnet, daß die gesamte Siliziumscheibe (1) im Bereich der Bildelemente auf eine Stärke von unter 2µm heruntergeätzt wird, so daß ringsherum ein Rahmen (10) stehenbleibt, in welchem die Treiberschaltungen zur Ansteuerung der Schaltelemente, insbesondere Bildpunkttransistoren in integrierter Technik, angeordnet sind.

4. Verfahren nach einem der Ansprüche 1 bis 3, dadurch gekennzeichnet, daß der Rahmen (10) im äußeren Rand zur Kontaktierung der auf der Siliziumscheibe (1) befindlichen Treiberschaltungen (26) verwendet wird.

5. Verfahren nach einem der Ansprüche 1 bis 4, dadurch gekennzeichnet, daß der Rahmen (10) zur mechanischen Halterung und Montage des Aktivmatrix-Flüssigkristalldisplays verwendet wird.

6. Verfahren nach einem der Ansprüche 1 bis 5, dadurch gekennzeichnet, daß die Abstandshalter (1 1) Kügelchen mit definiertem Radius sind.

7. Verfahren nach einem der Ansprüche 1 bis 5, dadurch gekennzeichnet, daß die Siliziumschicht Dotierstoffwannen derart eingebracht werden, daß beim späteren anisotropen Ätzen Erhebungen (11) mit vorbestimmter Höhe erhalten bleiben, und diese als Abstandshalter für die spätere Montage der LCD-Zellen dienen.

8. Verfahren nach einem der Ansprüche 1 bis 7, dadurch gekennzeichnet, daß bei komplett im Bereich der Fenster (5) entferntem Silizium ein Schichtsystem aus Isolatoren (19) und einer darüber vorgesehenen durchsichtigen Elektrode (16) übrig bleibt.

9. Verfahren nach einem der Ansprüche 1 bis 8, dadurch gekennzeichnet, daß die Gräben (4) bei der anisotropen Ätzung durch geeignete Form einer Strukturierung auf der Unterseite der Si-Scheibe (1) eingebracht werden.

## Claims

1. Method for the production of integrated active-matrix liquid crystal displays with a monocrystalline silicon slice, which is subdivided in chequerboard manner into picture elements, wherein each picture element consists of a light relay, which is formed from a liquid crystal layer, orienting layers, electrodes and polarisation filters, and a driving electronic circuit, which is produced in integrated mode of construction on the surface of the silicon slice and drives a light-permeable electrode of the light relay, characterised thereby
- that initially the driver electronic system together with pixel transistors (20) and pixel electrodes (16) is produced on the monocrystalline slice (1) by a production method known from microelectronics,
- windows (5) which are arranged in chequerboard manner, are produced on the surface in the silicon (1) by means of a structured mask,
- that trenches (4) are formed in the surface of the silicon slice (1),
- that the silicon slice (1) is covered on the surface by a glass pane (8) by means of an adhesive (7),
- that the silicon slice (1) is anisotropically etched by an etching process through a pattern created on the underside in a masking layer, in which the silicon is removed either up to an etching stop layer formed in the surface by ion implantation and/or diffusion or up to a non-etchable membrane applied to the surface,
- that in this manner an etched pit with recesses (14) Is formed in the region of the windows (5) in the silicon slice (1), wherein the windows (5) are permeable at least by light in the visible range,
- that an orienting layer (25) is formed in the recesses (14),
- that a second glass pane (12) Is covered at the underside by a polarisation filter and at the upper side by an electrode (17) and an orienting layer (18),
- that the second glass pane (12) is inserted into the etched pit and covers all recesses (14) and is held by spacers (11) at a defined spacing relative to the pixel electrodes (16, 17).
- that the space between the electrodes (16. 17) is evacuated through the trenches (4), filled with liquid crystal and hermetically closed.

2. Method according to claim 1, characterised thereby that the silicon layer (9) has a thickness of 0.4 to 1 micron in the region of the windows (5).

3. Method according to claim 1 or 2, characterised thereby that the entire silicon slice (1) is etched down to a thickness of below 2 microns in the region of the picture elements, so that a frame (10) is left annularly around, in which the driver circuits for driving of the switching elements, especially pixel transistors in integrated mode of construction, are arranged.

4. Method according to one of claims 1 to 3, characterised thereby that the frame (10) is used in the outer edge for contact-making with the driver circuits (26) disposed on the silicon slice (1).

5. Method according to one of claims 1 to 4, characterised thereby that the frame (10) is used for mechanical retention and mounting of the active-matrix liquid crystal display.

6. Method according to one of claims 1 to 5, characterised thereby that the spacers (11) are small balls of defined radius.

7. Method according to one of claims 1 to 5, characterised thereby that doping material troughs are formed at the silicon layer in such a manner that, in the later anisotropic etching, elevations (11) af predetermined height are left and these serve as spacers for the later mounting of the liquid crystal display cells.

8. Method according to one of claims 1 to 7, characterised thereby that in the case of completely removed silicon in the region of the windows (5) a layer system of insulators (19) and a transparent electrode (16) provided thereabove are left remaining.

9. Method according to one of claims 1 to 8, characterised thereby that the trenches (4) are formed in the anisotropic etching through suitable form of a structuring on the underside of the silicon slice (1).

## Revendications

1. Procédé de fabrication de visuels à cristaux liquides à matrice active intégrés avec une plaquette de silicium monocristallin, qui est divisée en éléments d'image à la façon d'un échiquier, dans le cas duquel chaque éléments d'image d'un organe laissant passer ou arrêtant la lumière, consistant en une couche de cristaux liquides, en couches d'orientation, en électrodes et en filtre de polarisation, ainsi que d'un circuit électronique de commande qui est fabriqué en mode intégré sur la face supérieure de la plaquette de silicium et qui commande une électrode, transparente à la lumière, de l'organe laissant passer ou arrêtant la lumière, caractérisé par le fait:
- que l'on réalise tout d'abord l'électronique de commande, avec des transistors d'élément d'image (20) et des électrodes d'élément d'image (16) par un procédé de fabrication, connu à partir de la micro-électronique, sur la plaquette de silicium monocristallin (1),
- sur la face supérieure, on prépare dans le silicium (1) au moyen d'un masque structuré, des fenêtres (5) qui sont disposées à la façon d'un échiquier,
- que l'on usine des tranchées (4) dans la face supérieure de la plaquette de silicium (1),
- que, sur sa face supérieure, on recouvre la plaquette de silicium (1) d'une plaque de verre (6) au moyen d'une colle (7),
- que, au moyen d'un motif produit sur la face inférieure dans une couche de masquage, on attaque la plaquette de silicium (1) en mode anisotrope avec un procédé d'attaque dans le cas duquel on enlève le silicium soit jusqu'à une couche d'arrêt d'attaque mise en place dans la surface par implantation d'ions et/ou diffusion soit jusqu'à une membrane rapportée sur la surface et non attaquable,
- que de cette façon on forme dans la plaquette de silicium (1) une fosse avec des évidements (14) dans la zone des fenêtres (5), les fenêtres (5) étant transparentes au moins pour la lumière sur la plage de la lumière visible,
- que l'on applique dans les évidements (14) une couche d'orientation (25),
- que l'on recouvre la seconde plaque de verre (12), sur sa face inférieure, d'un filtre de polarisation et, sur sa surface supérieure, d'une électrode (7) et d'une couche d'orientation (18),
- que l'on insère la seconde vitre de verre (12) dans la fosse de façon qu'elle recouvre tous les évidements (14) et soit maintenue, par des écarteurs (14), à un écartement défini par rapport aux électrodes d'élément d'image (17),
- que, par les tranchées (4), on met sous vide l'espace existant entre les électrodes (16, 17), on le remplit de cristaux liquides et on l'obture hermétiquement.

2. Procédé selon la revendication 1, caractérisé par le fait que la couche de silicium (9) présente, dans la zone des fenêtres (5), une épaisseur de 0,4-1 µm.

3. Procédé selon la revendication 1 ou 2, caractérisé par le fait que, dans la zone des éléments d'image, on enlève, par attaque, la totalité de la couche de silicium (1) sur une épaisseur de moins de 2 µm, de façon que subsiste tout autour un cadre (10) dans lequel sont disposés, en technique intégrée, les circuits d'excitation pour la commande des éléments de commutation, en particulier les transistors d'élément d'image.

4. Procédé selon l'une des revendications 1 à 3, caractérisé par le fait que l'on emploie le cadre (10) situé sur le bord extérieur pour la mise en contact des circuits d'excitation (26) qui se trouvent sur la plaquette de silicium (1).

5. Procédé selon l'une des revendications 1 à 4, caractérisé par le fait que l'on emploie le cadre (10) pour le maintien et le montage mécaniques du visuel à cristaux liquides à matrice active.

6. Procédé selon l'une des revendications 1 à 5, caractérisé par le fait que les écarteurs (11) sont des petites billes de rayon défini.

7. Procédé selon l'une des revendications 1 à 5, caractérisé par le fait que dans la couche de silicium on réalise des cuvettes, résultant du dopage, de façon que lors d'attaques anisotropes ultérieures, subsistent des éminences (11) de hauteur prédéterminée et que celles-ci servent d'écarteurs pour le montage ultérieur des cellules de visuels à cristaux liquides.

8. Procédé selon l'une des revendications 1 à 7, caractérisé par le fait que, le silicium étant complètement éliminé dans la zone des fenêtres (5), il subsiste un système de couches constitué d'isolateurs (19) et d'une électrode transparente (16) prévue par dessus.

9. Procédé selon l'une des revendications 1 à 8, caractérisé par le fait que l'on réalise les tranchées (4) lors d'une attaque anisotrope grâce à une forme appropriée de structuration sur la face inférieure de la plaquette de silicium (1).
